# EUROPÄISCHE PATENTSCHRIFT

(11) **EP 2 281 127 B1**
(45) Veröffentlichungstag und Bekanntmachung des Hinweises auf die Patenterteilung: **06.08.2014**
(21) Anmeldenummer: 09757314.1
(22) Anmeldetag: 05.06.2009
(51) Int. Cl.: F16D 23/12

(54) **KUPPLUNGSANORDNUNG MIT AXIALVERSTELLVORRICHTUNG UND LINEARANTRIEBSMITTELN**
COUPLING ASSEMBLY WITH AXIAL ADJUSTING DEVICE AND LINEAR DRIVE MEANS
DISPOSITIF D'ACCOUPLEMENT AVEC DISPOSITIF DE POSITIONNEMENT AXIAL ET MOYENS D'ENTRAÎNEMENT LINÉAIRES

(30) Priorität: 05.06.2008 DE 102008026902
(43) Veröffentlichungstag der Anmeldung: 09.02.2011
(73) Patentinhaber: GKN Driveline International GmbH, 53797 Lohmar (DE)
(72) Erfinder: CHLUDEK, Adrian, 53757 St. Augustin (DE); SCHMIDT, Mark, 53639 Königswinter (DE); BAER, Andreas, 53757 St. Augustin (DE)
(74) Vertreter: Oberwalleney, Stephan
(86) Internationale Anmeldenummer: PCT/EP2009/004053
(87) Internationale Veröffentlichungsnummer: WO 2009/146931

(56) Entgegenhaltungen:
- DD-A- 31 220
- DE-A1- 19 537 718
- DE-A1- 19 611 183
- FR-A- 2 760 499
- FR-A- 2 807 488
- FR-A- 2 812 048
- GB-A- 694 722
- US-A- 1 045 688
- US-A1- 2007 137 970

## Beschreibung

Die Erfindung betrifft eine Kupplungsanordnung zum Zuschalten einer Antriebsachse im Antriebsstrang eines Kraftfahrzeugs mit einer Axialverstellvorrichtung, die derart gestaltet ist, daß sie eine Drehbewegung in eine Axialbewegung umsetzen kann.

Derartige Reibungskupplungen können als sogenannte Hang-on-Kupplungen zum bedarfsweisen Antreiben einer zusätzlichen Antriebsachse oder als Sperrkupplung an einer Getriebestufe zur variablen Drehmomentverteilung zwischen zwei Antriebsachsen eines Differentialgetriebes dienen.

Aus der DE 39 20 861 A1 ist eine mechanische Axialverstellvorrichtung zum Betätigen einer Reibungskupplung in einem Sperrdifferential bekannt, die in Form einer Kugelrampenanordnung gestaltet ist. Diese umfaßt einen axial festen Stützring und einen axial verschiebbaren Stellring, von denen einer gegenüber dem anderen verdrehbar ist. Zum Verdrehen ist ein Drehantrieb in Form eines Elektromotors vorgesehen, der den verdrehbaren Ring über eine Untersetzungsstufe antreiben kann.

Aus der DE 10 2005 053 555 B3 ist eine elektromotorisch steuerbare Kugelrampenanordnung bekannt, die zum Betätigen einer Reibungskupplung in einem Differentialgetriebe mit variabler Drehmomentverteilung dient.

Bei den Axialverstellvorrichtungen der genannten Art erfolgt die Betätigung mittels eines Elektromotors, welcher eine relative Verdrehung der beiden Ringe bewirkt. Der Elektromotor muß hinreichend groß dimensioniert werden, um die für die Verdrehung notwendige Drehmomentkapazität bereitzustellen. Dies hat zur Folge, daß die Elekromotoren einen großen Bauraum in Anspruch nehmen und hinsichtlich des sogenannten "Packaging" unter Umständen schwierig in das Aggregat zu integrieren sind, das mittels der Axialverstellvorrichtung betätigt wird.

Aus der DE 103 49 030 A1 ist eine hydraulische Axialverstellvorrichtung mit einer Pumpe und einem Kolben zum Beaufschlagen einer Reibungskupplung bekannt.

Aus der DE 10 2005 018 907 A1 ist ein Ausgleichsgetriebe mit einer Lamellenbremse für eine elektrisch angetriebene Antriebsachse bekannt. Die Bremse ist über eine Kugelrampe betätigbar, wobei die Verdrehung eines verdrehbaren Bauteils der Kugelrampe durch einen Hydraulikzylinder ausgeführt sein kann.

Aus der DE 36 17 074 A1 ist eine Achsbaugruppe für ein Kraftfahrzeug bekannt. Die Achsbaugruppe umfaßt ein Differentialgetriebe, eine Bremse, welche auf die Halbwellen des Differentialgetriebes wirkt, und eine Differentialsperre. Zwischen der Bremse und der Differentialsperre ist eine gemeinsame Betätigungsvorrichtung vorgesehen, die in Form einer Kugelrampenvorrichtung gestaltet ist und zwei Druckplatten umfaßt. Zum Verdrehen einer der beiden Druckplatten relativ zur anderen Druckplatte ist ein Hydraulikzylinder vorgesehen.

Aus der AT 004 635 U1 ist eine Klauenkupplung für ein sperrbares Achsdifferential bekannt. Die Klauenkupplung wird mittels einer Betätigungsvorrichtung betätigt, die zwei Ringe aufweist, von denen einer gegenüber dem anderen verdrehbar ist. Zum Verdrehen des einen Rings gegenüber dem zweiten Ring dient ein Aktuator, der in Form eines Solenoids gestaltet ist.

Aus der US 2007/0137970 A1 ist ein Aktuator zum Betätigen einer Kupplung bekannt, bei dem durch Verdrehen einer äußeren Platte konische Wälzkörper nach radial innen beaufschlagt werden, um zwei innerhalb der Platte liegende Scheiben axial auseinander zu drücken.

Aus der GB 694 722 ist ein Schaltsystem für eine doppeltwirkende Kupplung bekannt, die wahlweise Drehmoment von einem Hydrauliksystem oder - unter Umgehung des Hydrauliksystems - direkt übertragen kann. Hierfür ist ein Schaltmechanismus vorgesehen mit einem Kragen und einem Betätigungsring, welcher über einen Gabelarm relativ zum Kragen verdrehbar ist.

Aus der DD 31 220 ist eine Kupplung mit Betätigungseinrichtung bekannt, die durch Federn im Schließsinne beaufschlagt wird. Durch Verdrehung eines inneren Teils der Betätigungseinrichtung gegenüber einem äußeren Teil wird die Kupplung über einen Stift ausgerückt, das heißt im Öffnungssinne betätigt.

Der vorliegenden Erfindung liegt die Aufgabe zugrunde, eine Kupplungsanordnung zum Zuschalten einer Antriebsachse mit einer Axialverstellvorrichtung vorzuschlagen, die derart gestaltet ist, daß sie eine Drehbewegung in eine Axialbewegung umsetzen kann, und die dazu geeignet ist, hohe Drehmomente und damit hohe Axialkräfte zu erzeugen. Die Axialverstellvorrichtung sollte dabei einfach aufgebaut sein und eine leichte Integration in eine Kupplungsanordnung, insbesondere im Antriebsstrang eines Kraftfahrzeugs ermöglichen.

Die Lösung liegt in einer Kupplungsanordnung zum Zuschalten eines bedarfsweise antreibbaren sekundären Antriebsstrangs an einen permanent angetriebenen primären Antriebsstrang, umfassend eine Reibungskupplung mit einem ersten Kupplungsteil, einem zweiten Kupplungsteil und einem Lamellenpaket, wobei das erste und zweite Kupplungsteil um eine Drehachse drehbar und durch Einwirken von Axialkräften auf das Lamellenpaket zur Übertragung eines Drehmoments aneinander koppelbar sind; sowie eine Axialverstellvorrichtung zur Betätigung der Reibungskupplung, wobei die Axialverstellvorrichtung einen ersten Ring und einen zweiten Ring aufweist, der gegenüber dem ersten Ring zumindest mittelbar axial abgestützt ist und der bei Verdrehung zumindest eines der beiden Ringe um eine Achse A axial verschiebbar ist, wobei der erste Ring der Axialverstellvorrichtung und das Lamellenpaket der Reibungskupplung gegenüber dem ersten Kupplungsteil axial abgestützt sind, und wobei zur Verdrehung des zumindest einen der beiden Ringe Linearantriebsmittel vorgesehen sind.

Die Linearantriebsmittel haben den Vorteil, daß sich hiermit verhältnismäßig große Kräfte erzeugen lassen, die in entsprechend große Drehmomente an der Axialverstellvorrichtung umgewandelt werden. Somit sind auch die von der Axialverstellvorrichtung durch Verdrehung des einen Rings gegenüber dem anderen Ring erzeugten Axialkräfte erhöht, so daß ein hohes Sperrmoment zum Beaufschlagen der Reibungskupplung zur Verfügung steht. Auf diese Weise läßt sich die Kupplungsanordnung insbesondere für Anwendungen einsetzen, in denen hohe Sperrmomente erzeugt werden müssen, beispielsweise in Antriebssträngen von schweren Fahrzeugen, wie Lastwagen. Für einen axial kompakten Aufbau der Kupplungsanordnung ist es günstig, wenn die Linearantriebsmittel derart angeordnet sind, daß deren Längsachse die Drehachse der Reibungskupplung mit Abstand kreuzt. Die Kupplungsanordnung hat somit eine hohe Leistungsdichte bei gleichzeitig geringer Baugröße.

Mit dem Merkmal, daß die beiden Kupplungsteile ,aneinander koppelbar' sind, ist gemeint, daß die Reibungskupplung so betätigt wird, daß ein Drehmoment zwischen dem ersten Kupplungsteil und dem zweiten Kupplungsteil übertragen wird. Insbesondere sind damit auch Zwischenstellungen gemeint, die zwischen der Offenstellung, bei der die beiden Kupplungsteile frei zueinander drehen können, und der Schließstellung, bei der die beiden Kupplungsteile gemeinsam miteinander um die Drehachse drehen, liegen. Der erste Ring der Axialverstellvorrichtung ist gegenüber einem ortsfesten Bauteil, und zwar dem ersten Kupplungsteil, zumindest mittelbar axial abgestützt. Das bedeutet, daß die Abstützung unter Zwischenschaltung weiterer Bauteile erfolgen kann. Beispielsweise kann zwischen dem ersten Ring und dem ortsfesten Bauteil ein Axiallager angeordnet sein. Zwischen den beiden Ringen können beispielsweise Kugeln vorgesehen sein, über die sich die beiden Ringe gegeneinander axial abstützen.

Es ist vorgesehen, daß zumindest einer der beiden Ringe mit den Linearantriebsmitteln derart antriebsverbunden ist, daß bei Betätigung der Linearantriebsmittel der eine Ring relativ zum anderen Ring verdreht wird. Mit "zumindest einer der beiden Ringe" ist gemeint, daß die Linearantriebsmittel nach einer ersten Möglichkeit nur auf einen der beiden Ringe im Drehsinn einwirken, während der andere Ring drehfest gehalten ist. Eine andere Alternative besteht darin, daß die Linearantriebsmittel bei Betätigung auf beide Ringe gleichzeitig einwirken und diese gegeneinander verdrehen. Nach einer bevorzugten Ausgestaltung, bei der die Linearantriebsmittel nur auf einen der Ringe einwirken, ist der axial abgestützte erste Ring, der auch als Stützring bezeichnet werden kann, drehfest gehalten, während der axial verschiebbare zweite Ring, der auch als Stellring bezeichnet werden kann, mittels der Linearantriebsmittel drehbar ist. Es ist jedoch auch die Umkehrung möglich, wonach der Stützring von den Linearantriebsmitteln im Drehsinn beaufschlagt wird, während der Stellring verdrehgesichert relativ zum Stützring gehalten ist.

Vorzugsweise umfassen die Linearantriebsmittel ein im wesentlichen translatorisch bewegbares Kraftübertragungselement, das mit dem zumindest einen Ring verbunden ist. Im wesentlichen translatorisch bedeutet, daß das Kraftübertragungselement, je nach Ausführungsform, neben der translatorischen Bewegung auch leichte Schwenkbewegungen ausführen kann. Die Verbindung zwischen dem Kraftübertragungselement und dem zumindest einen Ring ist dergestalt, daß die weitestgehend lineare Bewegung des Kraftübertragungselements in eine Drehbewegung des zumindest einen Rings umgewandelt wird. Die Kraftwirkungsrichtung R1 des Kraftübertragungselements verläuft mit Abstand a zur Drehachse A. Dabei bestimmt der Abstand a der Kraftwirkungslinie zur Drehachse A den Hebelarm und damit das erzeugbare Drehmoment der Axialverstellvorrichtung. Je größer der Abstand a der Kraftwirkungslinie zur Drehachse A ist, desto größer ist auch das auf den zumindest einen Ring übertragene Drehmoment bzw. die vom zweiten Ring erzeugte Axialkraft.

Nach einer bevorzugten ersten Ausführungsform umfassen die Linearantriebsmittel eine Kolben-Zylinder-Einheit, deren Kolben mit dem Kraftübertragungselement verbunden ist. Dabei kann die Kolben-Zylinder-Einheit sowohl einen hydraulischen oder einen pneumatischen Kolbenzylinder umfassen, insbesondere einen pneumatisch betriebenen Membranzylinder. Die hydraulische oder pneumatische Kolben-Zylinder-Einheit ist vorzugsweise einfachwirkend, kann bei bestimmten Anwendungsfällen aber auch doppeltwirkend gestaltet sein. Der Vorteil der hydraulischen oder pneumatischen Kolben-Zylinder-Einheit besteht darin, daß diese gegebenenfalls in einen ohnehin vorhandenen Hydraulikkreis bzw. Pneumatikkreis des Kraftfahrzeugs integriert werden kann. Nach einer alternativen zweiten Ausführungsform umfassen die Linearantriebsmittel einen linearen Elektroantrieb. Der lineare Elektroantrieb kann dabei als Synchron- oder Asynchronmaschinen gestaltet sein.

Das Kraftübertragungselement ist nach einer ersten Möglichkeit in Form einer Koppelstange gestaltet, die gelenkig mit dem zumindest einen Ring einerseits und dem Ausgangsteil der Kolben-Zylinder-Einheit andererseits verbunden ist. Dabei kann die gelenkige Verbindung beispielsweise mittels Kugelköpfen bewerkstelligt werden. Eine zweite Möglichkeit sieht vor, daß das Kraftübertragungselement in Form einer Zahnstange gestaltet ist, die zur Kraftübertragung mit einem Zahnsegment an dem zumindest einen drehbaren Ring in Eingriff ist. Dabei kämmt die Verzahnung der Zahnstange mit der Verzahnung des Zahnsegments, so daß eine translatorische Bewegung der Zahnstange eine Verdrehung des zumindest einen Rings bewirkt.

Nach einer bevorzugten Ausgestaltung sind Federmittel vorgesehen, die der Kraftwirkungsrichtung des Kraftübertragungselements entgegenwirken. Die Federmittel bewirken, daß das Kraftübertragungselement wieder in seine Ausgangsstellung zurückbewegt wird, wenn die Linearantriebsmittel deaktiviert sind. Bei Anschalten der Linearantriebsmittel wird das Kraftübertragungselement entgegen der Kraft der Federmittel bewegt, so daß der zumindest eine Ring verdreht wird und die Axialverstellvorrichtung eine Axialkraft erzeugt. Bei Abschalten der Linearantriebsmittel wird das Kraftübertragungselement und damit auch der zumindest eine Ring wieder in seine Ausgangsstellung zurückbewegt, so daß die beiden Ringe sich axial wieder annähern, wodurch die Axialkraft reduziert wird.

Vorzugsweise weist zumindest einer der beiden Ringe sich in Umfangrichtung erstreckende Bahnen bzw. Rampen mit veränderlicher Tiefe als Stellkontur auf, über welche die beiden Ringe zumindest mittelbar gegeneinander axial abgestützt sind. Zumindest mittelbar bedeutet in diesem Zusammenhang, daß sich die beiden Ringe unmittelbar gegeneinander abstützen können, beispielsweise mittels rampenartiger Bahnen, die miteinander in Anlagekontakt sind. Die beiden Ringe können sich aber auch über Kugeln gegeneinander axial abstützen, die in Kugelrillen als Bahnen geführt sind. Diese Ausgestaltung wird auch als Kugelrampenanordnung bezeichnet. Dabei hat der erste Ring sich in Umfangsrichtung erstreckende erste Kugelrillen, und der zweite Ring sich in Umfangsrichtung erstreckende zweite Kugelrillen. Die ersten und zweiten Kugelrillen weisen jeweils in Draufsicht auf die Stirnflächen in gleicher Umfangsrichtung eine abnehmende Tiefe auf, wobei in jeweils einem Paar aus einer ersten und einer gegenüberliegenden zweiten Kugelrille eine Kugel aufgenommen ist, über die sich die beiden Ringe axial gegeneinander abstützen. Alternativ zu der Ausgestaltung als Kugelrampenanordnung können die beiden Ringe auch als Rampenscheiben ausgestaltet sein. Zwischen den Rampenscheiben sind vorzugsweise Zylinderrollen angeordnet, über die sich die Rampenscheiben gegeneinander axial abstützen.

Nach einer bevorzugten Ausgestaltung umfaßt das erste Kupplungsteil eine Kupplungsnabe, wobei die Axialverstellvorrichtung koaxial zur Kupplungsnabe angeordnet ist. Das zweite Kupplungsteil ist vorzugsweise in Form eines Kupplungskorbs gestaltet, der koaxial außen zur Kupplungsnabe liegt und relativ zu diesem um die Drehachse A drehbar ist. Es ist insbesondere vorgesehen, daß die Reibungskupplung als Lamellenkupplung gestaltet ist, wobei das erste Kupplungsteil einen Innenlamellenträger aufweist, mit dem Innenlamellen drehfest und axial beweglich verbunden sind, und das zweite Kupplungsteil einen Außenlamellenträger, mit dem Außenlamellen drehfest und axial beweglich verbunden sind.

Vorzugsweise ist der erste Ring der Axialverstellvorrichtung gegenüber dem ersten Kupplungsteil axial abgestützt und gegenüber diesem um die Drehachse A drehbar gelagert. Es sind ferner Drehsicherungsmittel vorgesehen, die den ersten Ring gegenüber einem stehenden Bauteil, beispielsweise einem Gehäuse, gegen Verdrehung halten. Der zweite Ring ist mit den Kraftübertragungsmitteln verbunden und bewegt sich bei Verdrehung durch Betätigung der Axialverstellvorrichtung axial in Richtung zur Reibungskupplung, so daß diese im Schließsinne beaufschlagt wird.

Vorzugsweise ist zwischen dem zweiten Ring der Axialverstellvorrichtung und der Reibungskupplung eine axial bewegliche Druckplatte zum Beaufschlagen der Reibungskupplung vorgesehen. Die Druckplatte hat einen äußeren Flanschabschnitt zum Beaufschlagen der Reibungskupplung sowie einen inneren Flanschabschnitt, auf den der zweite Ring der Axialverstellvorrichtung einwirkt. Es ist für einen axial kompakten Aufbau günstig, wenn der innere Flanschabschnitt gegenüber dem äußeren Flanschabschnitt axial versetzt ist, und zwar insbesondere so daß der innere Flanschabschnitt zumindest teilweise mit axialer Überdeckung zur Reibungskupplung angeordnet ist. Radial innerhalb des Innenlamellenträgers ist vorzugsweise ein Ringraum gebildet, in dem die Druckplatte mit ihrem inneren Flanschabschnitt aufgenommen ist. Durch diese Ausgestaltung kann die Axialverstellvorrichtung nah an der Reibungskupplung angeordnet werden, so daß sich insgesamt eine axial kurzbauende Einheit ergibt, die augrund des Linearantriebs ein hohes Kupplungsmoment erzeugen kann.

Bevorzugte Ausführungsbeispiele der Erfindung werden nachstehend anhand der Zeichnungsfiguren erläutert. Hierin zeigt
- Figur 1: eine erfindungsgemäße Kupplungsanordnung in einer ersten Ausführungsform in Axialansicht mit einer Reibungskupplung und einer Axialverstellvorrichtung;
- Figur 2: die Kupplungsanordnung gemäß Schnittlinie II-II aus Figur 1;
- Figur 3: eine erfindungsgemäße Kupplungsanordnung in einer zweiten Ausführungsform im Längsschnitt;
- Figur 4: die Rampenanordnung aus Figur 3 als Detail im Umfangsschnitt gemäß Schnittlinie IV-IV aus Figur 3;
- Figur 5: eine erfindungsgemäße Kupplungsanordnung in einer dritten Ausführungsform in einer Getriebeanordnung im Längsschnitt;
- Figur 6: die Getriebeanordnung aus Figur 5 in perspektivischer Ansicht, ohne Gehäuseteile;
- Figur 7: die Getriebeanordnung gemäß Schnittlinie VII-VII aus Figur 5 mit der erfindungsgemäßen Axialverstellvorrichtung;
- Figur 8: eine Axialverstellvorrichtung für eine erfindungsgemäße Kupplungsanordnung in einer vierten Ausführungsform als Prinzipbild in Draufsicht; und
- Figur 9: eine Axialverstellvorrichtung für eine erfindungsgemäße Kupplungsanordnung in einer fünften Ausführungsform als Prinzipbild in Draufsicht.

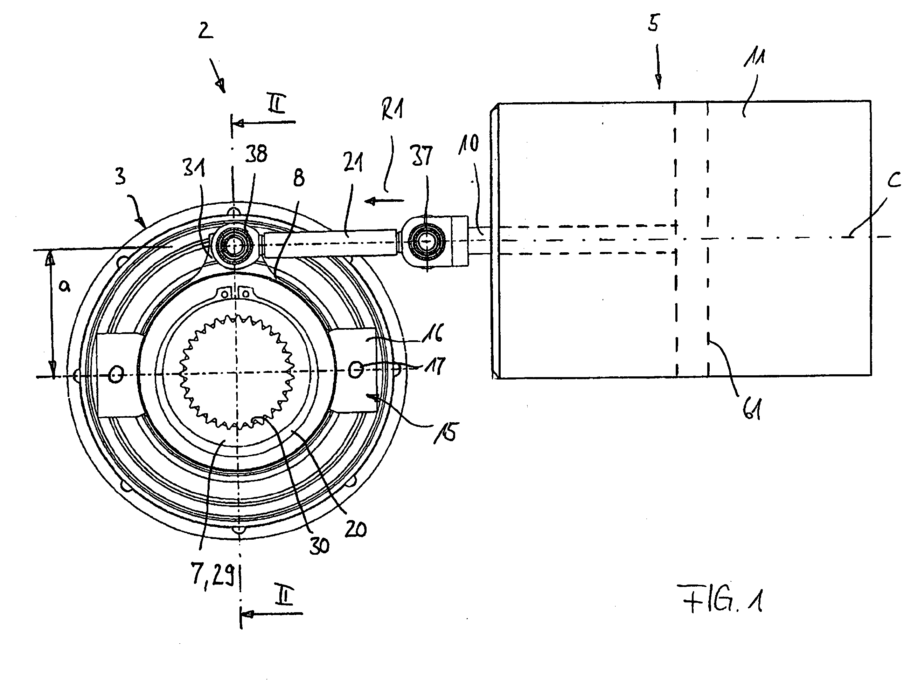

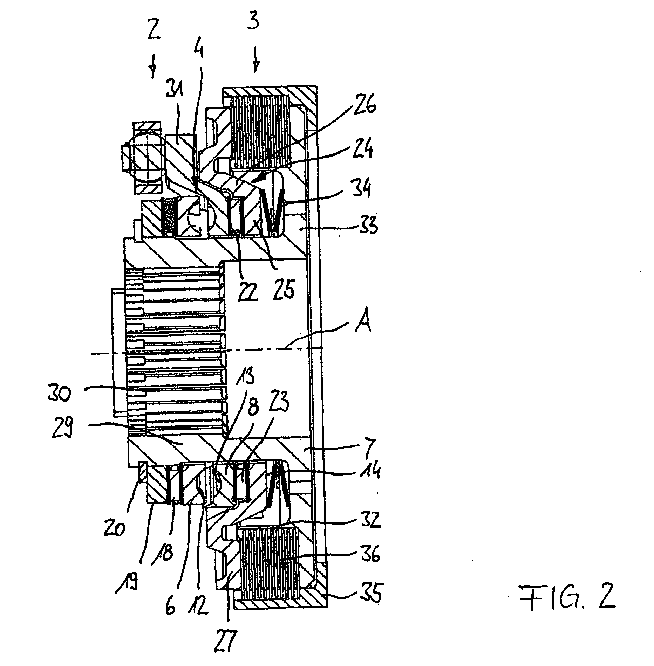

Die Figuren 1 und 2, welche im folgenden gemeinsam beschrieben werden, zeigen eine erfindungsgemäße Axialverstellvorrichtung 2 in einer ersten Ausführungsform, die zum Betätigen einer Reibungskupplung 3 dient. Die gesamte Baueinheit bestehend aus Axialverstellvorrichtung 2 und Reibungskupplung 3 kann auch als Kupplungsanordnung bezeichnet werden. Die Axialverstellvorrichtung 2 umfaßt eine Kugelrampenanordnung 4 und Linearantriebsmittel 5 zum Betätigen der Kugelrampenanordnung 4. Die Kugelrampenanordnung umfaßt einen ersten Ring 6, der mittelbar gegenüber einem ersten Kupplungsteil 7 der Reibungskupplung axial abgestützt ist und daher auch als Stützring 6 bezeichnet werden kann, sowie einen zweiten Ring 8, der mittelbar gegenüber dem ersten Ring 6 axial abgestützt und gegenüber diesem axial bewegbar ist. Die beiden Ringe 6, 8 weisen, wie insbesondere aus Figur 2 hervorgeht, jeweils auf ihren einander zugewandten Stirnflächen mehrere umfangsverteilte und sich in Umfangsrichtung erstreckende Kugelrillen 12, 13 mit gegensinnig veränderlicher Tiefe auf. In jeweils einem Paar von einander gegenüberliegenden Kugelrillen 12, 13 ist eine Kugel aufgenommen, über die sich die beiden Ringe 6, 8 axial gegeneinander abstützen. Die Kugeln befinden sich in einer anderen als der gezeigten Schnittebene und sind daher hier nicht sichtbar. Axial zwischen den beiden Ringen 6, 8 kann ein ringscheibenförmiger Käfig mit mehreren umfangsverteilten Fenstern vorgesehen sein. In jedem Fenster ist eine der Kugeln aufgenommen, die so in Umfangsrichtung in einer definierten Position zueinander gehalten werden.

Bei der vorliegenden Ausführungsform ist der erste Ring mittels Verdrehsicherungsmitteln 15 gegen Verdrehung um die Drehachse A gesichert, während der zweite Ring 8 mittels der Linearantriebsmittel 5 in begrenztem Umfang relativ zum ersten Ring 6 verdrehbar ist. Zur Verdrehsicherung hat der erste Ring 6 zwei nach radial außen vorstehende Vorsprünge 16, die mittels eines Stifts 17 mit einem ortsfesten Bauteil (nicht dargestellt) formschlüssig verbunden werden können. Es sind jedoch auch beliebig andere geeignete Verdrehsicherungsmittel denkbar, beispielsweise eine Verzahnung mit einem ortsfesten Bauteil. Es ist erkennbar, daß der erste Ring 6 mittels eines Axiallagers 18 gegenüber einer Stützplatte 19 axial abgestützt ist, die wiederum mittels eines Sicherungsrings 20 gegenüber dem ersten Kupplungsteil 7 axial abgestützt ist. Der zweite Ring 8, der auch als Stellring bezeichnet werden kann, hat an seiner Rückseite eine radiale Druckfläche 22, die über ein zwischengeschaltetes Axiallager 23 eine Druckplatte 24 axial beaufschlagt. Das Axiallager 23 kann beispielsweise in Form eines Nadellagers gestaltet sein. Es ist erkennbar, daß die Druckplatte 24 einen flanschförmigen inneren Abschnitt 25, einen in Bezug auf die Drehachse A winklig verlaufenden Übergangsabschnitt 26 sowie einen radial außen daran anschließenden äußeren Flanschabschnitt 27 zum Beaufschlagen der Reibungskupplung 3 aufweist.

Das erste Kupplungsteil 7 umfaßt eine hülsenförmige Kupplungsnabe 29 mit einer Längsverzahnung 30, in die eine Antriebswelle zur Drehmomentübertragung drehfest eingesteckt werden kann, einen Radialabschnitt 33 sowie einen hülsenförmigen Innenlamellenträger 32, mit dem Innenlamellen drehfest und axial verschiebbar verbunden sind. Zwischen dem Radialabschnitt 33 des ersten Kupplungsteils 7 und einer diesem gegenüberliegenden Stützfläche 14 der Druckplatte 24 sind Federmittel 34 wirksam eingesetzt, die die Druckplatte 24 von dem Radialabschnitt 33 weg beaufschlagen. Die Federmittel 34 sind in Form eines Paares von Tellerfedern gestaltet, wobei auch andere Federmittel, beispielsweise Spiralfedern, eingesetzt werden können. Die Reibungskupplung 3 umfaßt neben dem ersten Kupplungsteil 7 noch ein zweites Kupplungsteil 35, das relativ zum ersten Kupplungsteil 7 um die Drehachse A drehbar ist. Das zweite Kupplungsteil 35 ist in Form eines Außenlamellenträgers gestaltet, mit dem Außenlamellen drehfest und axial beweglich verbunden sind. Die Innenlamellen und die Außenlamellen sind axial abwechselnd angeordnet und bilden gemeinsam ein Lamellenpaket 36.

Die Linearantriebsmittel 5 umfassen eine Kolben-Zylinder-Einheit 11 und ein mit der Kolbenstange 10 der Kolben-Zylinder-Einheit 11 verbundenes Kraftübertragungselement 21. Es ist in Figur 1 ersichtlich, daß das Kraftübertragungselement 21 in Form einer Koppelstange gestaltet ist, die mit ihren Enden gelenkig an der Kolbenstange 10 einerseits und einem nach außen vorstehenden Betätigungshebel 31 des zweiten Rings 8 gelenkig verbunden ist. Zur Verbindung der Koppelstange 21 mit der Kolbenstange 10 einerseits und dem Betätigungshebel 31 andererseits sind Kugelgelenke 37, 38 vorgesehen. Die Kolben-Zylinder-Einheit 11 umfaßt einen einfach wirkenden hydraulischen oder pneumatischen Kolbenzylinder.

Die Funktionsweise der Axialverstellvorrichtung 2 bzw. der Kupplungsanordnung ist wie folgt. Im Normalzustand ist der Kolben der Kolben-Zylinder-Einheit 11 eingefahren und die beiden Ringe 6, 8 befinden sich mit geringstmöglichem Abstand zueinander. Bei Betätigung der Kolben-Zylinder-Einheit 11 wird der Kolben ausgefahren und überträgt eine Stellkraft auf das Kraftübertragungselement 21. Dieses bewegt sich im wesentlichen translatorisch in eine Kraftwirkungsrichtung R1, die mit Abstand a zur Drehachse A verläuft. Auf dieses Weise wird der zweite Ring 8 gegenüber dem drehfest gehaltenen ersten Ring 6 verdreht, so daß die Kugeln in den Kugelrillen 12, 13 in Bereiche geringerer Tiefe laufen. So findet zwischen den beiden Ringen 6, 8 eine axiale Spreizung statt, wobei der zweite Ring 8 axial in Richtung zur Reibungskupplung 3 entgegen der Federkraft der Federmittel 34 verschoben wird. Wird die Kolben-Zylinder-Einheit 11 wieder ausgeschaltet, so drücken die Federmittel 34 den zweiten Ring 8 über die Druckplatte 24 wieder in die Ausgangsposition zurück, wobei sich der zweite Ring 8 in seine Ausgangsstellung zurückdreht.

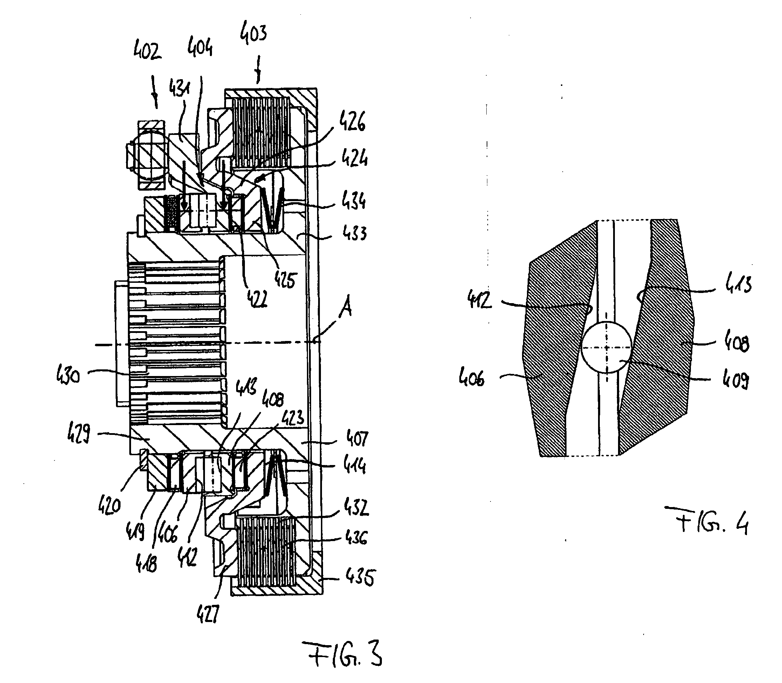

Die Figuren 3 und 4, welche im folgenden gemeinsam beschrieben werden, zeigen eine erfindungsgemäße Kupplungsanordnung mit einer Axialverstellvorrichtung 402 und einer Reibungskupplung 403 in einer zweiten Ausführungsform. Die vorliegende Axialverstellvorrichtung entspricht weitestgehend derjenigen aus den Figuren 1 und 2, weswegen hinsichtlich der Gemeinsamkeiten auf die obige Beschreibung Bezug genommen wird. Dabei sind gleiche bzw. einander entsprechende Bauteile mit um die Ziffer 400 hochgesetzten Bezugszeichen versehen. Der einzige Unterschied liegt in der Ausgestaltung des Rampenmechanismus. In der vorliegenden Ausführungsform haben der erste Ring 406 und der zweite Ring 408 Rampenflächen 412, 413 (anstelle von Kugelrillen), über welche die beiden Ringe 406, 408 axial gegeneinander abgestützt sind. Als Wälzkörper sind Zylinderrollen 419 vorgesehen, die zwischen den Rampenflächen 412, 413 gehalten sind. Die Funktionsweise ist analog zu der Kugelrampenanordnung aus Figur 1 bzw. 2. Bei Betätigen der Kolben-Zylinder-Einheit wird der zweite Ring 408 gegenüber dem drehfest gehaltenen ersten Ring 406 verdreht, so daß die Zylinderrollen 419 entlang der Rampenflächen 412, 413 in Bereiche geringerer Tiefe laufen. So findet zwischen den beiden Ringen 406, 408 eine axiale Spreizung statt, wobei der zweite Ring 408 axial in Richtung zur Reibungskupplung 403 entgegen der Federkraft der Federmittel 434 verschoben wird. Wird die Kolben-Zylinder-Einheit wieder ausgeschaltet, so drücken die Federmittel 434 den zweiten Ring 408 über die Druckplatte 424 wieder in die Ausgangsposition zurück, wobei sich der zweite Ring 408 in seine Ausgangsstellung zurückdreht. Der Vollständigkeit halber sei erwähnt, daß auch eine Rampenanordnung ohne Zylinderrollen denkbar ist, bei der die einander gegenüberliegenden Ringe unmittelbar über ihre Rampenflächen gegeneinander axial abgestützt sind.

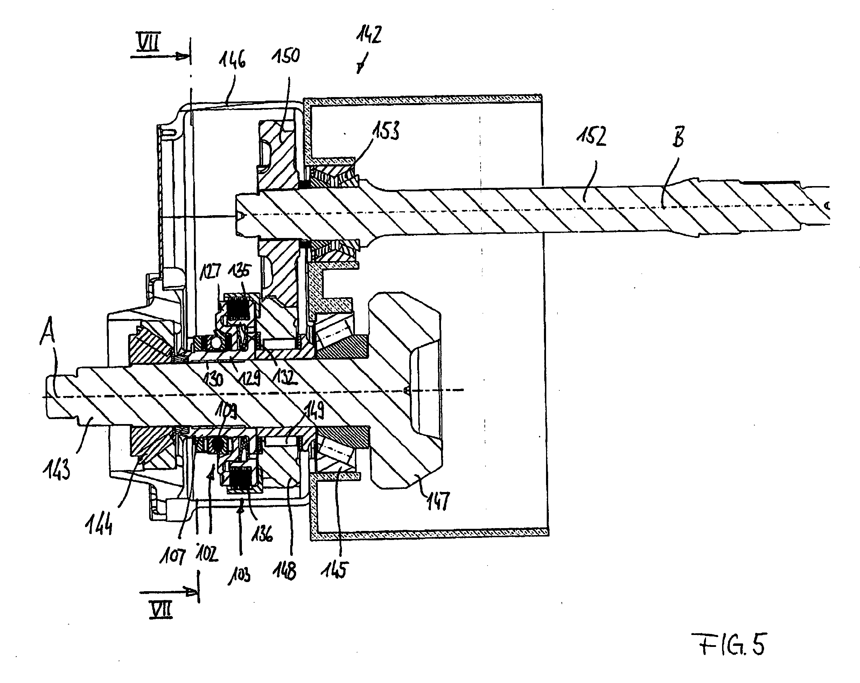

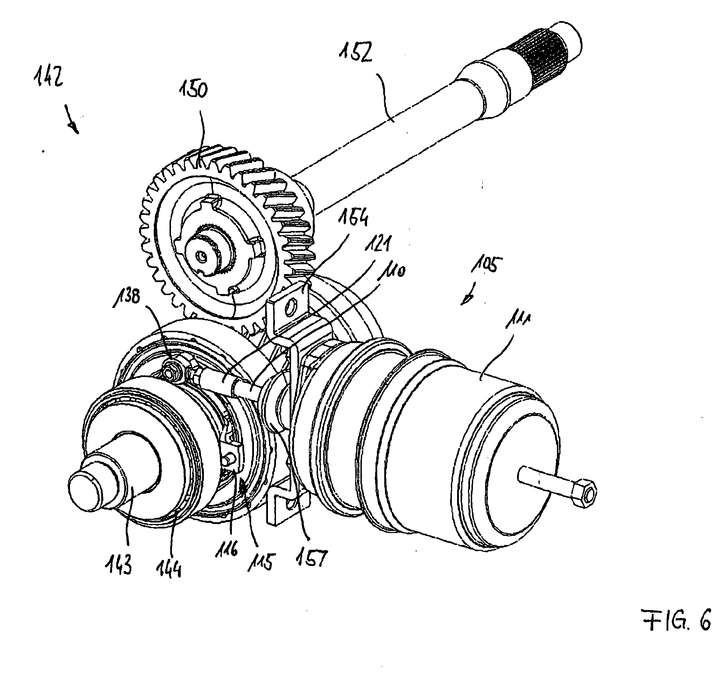

Die Figuren 5 bis 7, welche im folgenden gemeinsam beschrieben werden, zeigen eine Getriebeanordnung 142 mit einer erfindungsgemäßen Kupplungsanordnung mit Axialverstellvorrichtung 102 zur Betätigung der Reibungskupplung 103 in einer dritten Ausführungsform. Die vorliegende Kupplungsanordnung entspricht weitestgehend derjenigen aus den Figuren 1 und 2, weswegen hinsichtlich der Gemeinsamkeiten auf die obige Beschreibung Bezug genommen wird. Dabei sind gleiche bzw. einander entsprechende Bauteile mit gegenüber der Ausführungsform aus Figur 1 bzw. 2 um die Ziffer 100 hochgesetzten Bezugszeichen versehen. Im folgenden werden zunächst die Besonderheiten der vorliegenden Axialverstellvorrichtung erläutert; danach wird auf die Funktionsweise der gezeigten Getriebeanordnung insgesamt eingegangen.

Der einzige wesentlichen Unterschied der Axialverstellvorrichtung 102 in der vorliegenden Ausführungsform besteht in der Ausgestaltung der Linearantriebsmittel 105. Diese umfassen vorliegend eine Kolben-Zylinder-Einheit 111, die in Form eines pneumatisch betriebenen Membranzylinders gestaltet ist. Die Besonderheit des Membranzylinders ist, daß die Kolbenstange 110 leichte Schwenkbewegungen ausführen kann. Insofern ist als Kraftübertragungselement 121 lediglich ein Anschlußstück notwendig, das mit dem Ende der Kolbenstange 110 fest verbunden wird und dessen zweites Ende mittels des Kugelgelenks 138 mit dem Betätigungshebel 131 des zweiten Rings 108 gelenkig verbunden ist. Eine Koppelstange, wie in dem Ausführungsbeispiel gemäß den Figuren 1 und 2 gezeigt, ist vorliegend nicht erforderlich. Im übrigen entspricht der Aufbau und die Funktionsweise der Axialverstellvorrichtung 102 derjenigen gemäß dem ersten Ausführungsbeispiel, so daß diesbezüglich auf die obige Beschreibung Bezug genommen wird.

Die erfindungsgemäße Kupplungsanordnung, welche die Axialverstellvorrichtung 102 und die Reibungskupplung 103 umfaßt, ist Teil der Getriebeanordnung 142, welche zum bedarfsweisen Zuschalten eines zweiten Antriebsstranges an einen ersten Antriebsstrang dient. Hierfür hat die Getriebeanordnung 142 eine erste Antriebswelle 143, welche um die Drehachse A drehend antreibbar ist und mittels zweier Wälzlager 144, 145 in einem Getriebegehäuse 146 drehbar gelagert ist. Die erste Antriebswelle 143 ist in Form eines Antriebszapfens gestaltet, der an seinem Ende ein Kegelrad 147 zum Antreiben eines nicht dargestellten Differentialgetriebes aufweist. Die Kupplungsnabe 129 ist mittels der Längsverzahnung drehfest mit der ersten Antriebswelle 143 verbunden, so daß der Innenlamellenträger 132 gemeinsam mit dieser um die Drehachse A rotiert. Das zweite Kupplungsteil 135 ist fest mit einem ersten Zahnrad 148 verbunden, beispielsweise mittels Schweißen, das mittels eines Radiallagers 149 auf der ersten Antriebswelle 143 drehbar gelagert ist. Das erste Zahnrad 148 ist mit einem zweiten, größeren Zahnrad 150 in Verzahnungseingriff, das drehfest mit einer zweiten Antriebswelle 152 verbunden ist. Die zweite Antriebswelle 152 ist mittels eines Wälzlagers 153 in dem Getriebegehäuse 146 um eine zweite Achse B drehbar gelagert und dient zum Antreiben einer weiteren Antriebsachse des Kraftfahrzeugs (nicht dargestellt). In Figur 5 sind auch die zwischen dem ersten und dem zweiten Ring 106, 108 gehaltenen Kugeln 109 erkennbar.

Bei geöffneter Reibungskupplung 103 kann das erste Kupplungsteil 107 relativ zum zweiten Kupplungsteil 135 frei drehen, so daß zwischen den genannten Kupplungsteilen 107, 135 kein Drehmoment übertragen wird. Durch Betätigen der Linearantriebsmittel 105, die vorliegend in Form eines Membranzylinders gestaltet sind, wird der zweite Ring 108 der Axialverstellvorrichtung 102 relativ zum ersten Ring 106 verdreht, so daß das Lamellenpaket 136 beaufschlagt und die Kupplung 103 geschlossen wird. Auf diese Weise wird ein Drehmoment von der ersten Antriebswelle 143 auf die zweite Antriebswelle 152 übertragen.

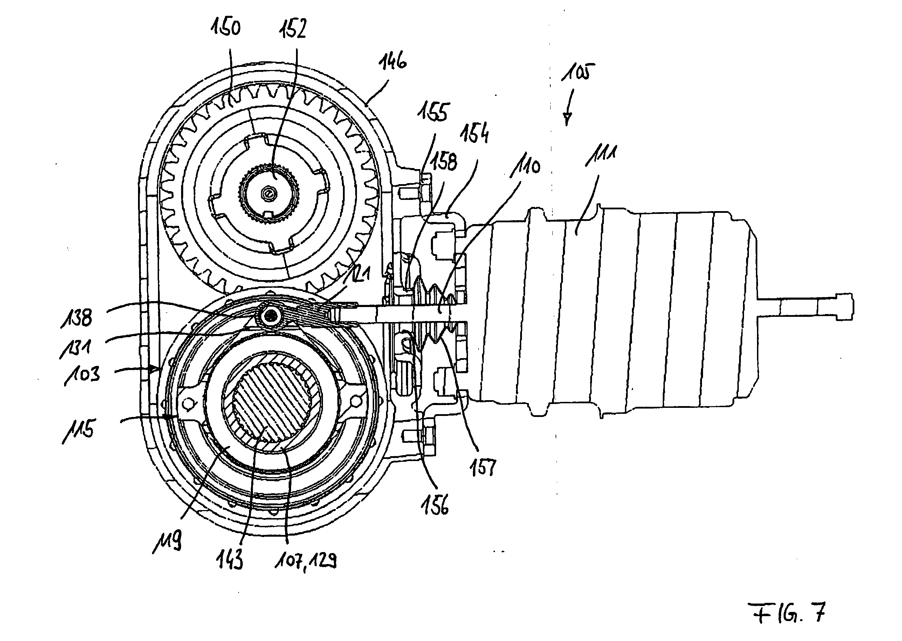

Wie insbesondere in Figur 7 ersichtlich ist, ist zur Befestigung der Kolben-Zylinder-Einheit 111 ein Trägerelement 154 vorgesehen, das mittels einer Schraubverbindung 155 mit dem Gehäuse 146 verbunden wird. Das Gehäuse 146 hat einen Durchbruch 156, durch den die Kolbenstange 110 hindurchtritt. Zur Abdichtung des Gehäuses 146 gegenüber der Umgebung ist eine Membranabdichtung 157 vorgesehen, die mit ihrem einen Ende auf der Kolbenstange 110 aufsitzt und mit ihrem entgegengesetzten zweiten Ende auf einem Hülsenansatz 158 des Gehäuses 146.

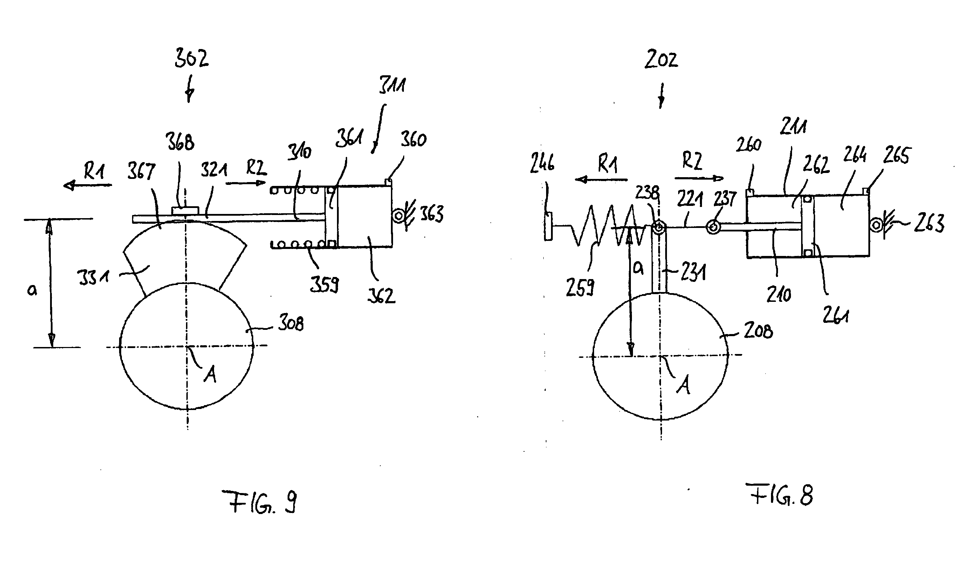

Die Figuren 8 und 9 zeigen jeweils weitere Ausführungsformen von Axialverstellvorrichtungen für erfindungsgemäße Kupplungsanordnungen als Prinzipdarstellung. Der Vollständigkeit halber sei angemerkt, daß die in den Figuren 9 und 10 jeweils nur schematisch gezeigte Rampenanordnung jede der obengenannten Ausgestaltungen gemäß den Figuren 1 bis 8 aufweisen kann.

Der Aufbau und die Funktionsweise der Axialverstellvorrichtung 202 gemäß Figur 8 entspricht weitestgehend denjenigen gemäß den Figuren 1 bis 7, so daß diesbezüglich auf die obige Beschreibung Bezug genommen wird. Dabei sind gleiche bzw. einander entsprechende Bauteile mit gegenüber der Ausführungsform gemäß den Figuren 5 bis 7 um nochmals 100 erhöhten Bezugsziffern versehen. Die vorliegende Ausführungsform ist dadurch gekennzeichnet, daß die Kolben-Zylinder-Einheit 211 als Zugelement fungiert. Im Normalzustand, d. h. bei deaktivierter Kolben-Zylinder-Einheit 211, wird der Betätigungshebel 231 des zweiten Rings 208 von einer Zugfeder 259 entgegen dem Uhrzeigersinn beaufschlagt in eine Drehposition, in der die zweite Scheibe 208 axial mit geringstem Abstand relativ zur ersten Scheibe 206 angeordnet ist. Die Zugfeder 259 ist an einem ortsfesten Bauteil, beispielsweise einem Gehäuse 246, befestigt und übt auf den Betätigungshebel 231 eine Kraft aus, deren Wirkrichtung mit R1 eingezeichnet ist. Um die Reibungskupplung 203 zu schließen bzw. die Axialverstellvorrichtung 202 zu betätigen, wird die pneumatische Kolben-Zylinder-Einheit 211 über den Anschluß 260 mit Druck beaufschlagt, so daß der Kolben 261 in eine der ersten Richtung R1 entgegengesetzt wirkende zweite Richtung R2 beaufschlagt wird. Dabei zieht die mit dem Kolben 261 verbundene Kolbenstange 210 über das Kraftübertragungselement 221 den Betätigungshebel 231 im Uhrzeigersinn, so daß der zweite Ring 208 gegenüber dem ersten Ring 206 verdreht wird und die Reibungskupplung 203 von der Druckplatte 224 beaufschlagt wird. Um den Kolben 238 der Kolben-Zylinder-Einheit 211 wieder in die Ausgangsposition zu bewegen, wird der Anschluß 260 geöffnet, so daß der Druck in der Kammer 262 sinkt und der Betätigungshebel 231 von der Zugfeder 259 wieder in die Ausgangsposition gezogen wird. Es ist prinzipiell auch denkbar, daß die Rückstellbewegung des Betätigungshebels 231 beschleunigt wird, und zwar indem am Anschluß 265 und damit in der Kammer 264 ein Überdruck erzeugt wird, welcher den Kolben 261 in die Richtung R1 beaufschlagt. Die Kolben-Zylinder-Einheit 211 ist an einem stehenden Bauteil 263 fixiert, das beispielsweise ein Gehäusebauteil sein kann. Eine Alternative zur Betätigung der Kolben-Zylinder-Einheit 211 kann darin bestehen, daß in der zweiten Kammer 264 am Anschluß 265 ein Unterdruck erzeugt wird, so daß der Kolben 261 in Richtung R2 bewegt wird.

Figur 9 zeigt eine Axialverstellvorrichtung 302 für eine erfindungsgemäße Kupplungsanordnung in einer weiteren Ausführungsform als Prinzipdarstellung. Der Aufbau und die Funktionsweise entspricht weitestgehend denjenigen gemäß den Figuren 1 bis 7, so daß diesbezüglich auf die obige Beschreibung Bezug genommen wird. Dabei sind gleiche bzw. einander entsprechende Bauteile mit um nochmals 100 erhöhten Bezugsziffern versehen. Die Besonderheit der vorliegenden Ausführungsform besteht darin, daß die Kraftübertragung von dem Kolben 361 auf den zweiten Ring 308 mittels einer Verzahnungsanordnung 366 erfolgt. Hierfür ist das Kraftübertragungselement 321 in Form einer Zahnstange gestaltet, die mit einem entsprechenden Zahnsegment 367 an einer Außenumfangsfläche des Betätigungshebels 331 zusammenwirkt. Es ist ein Gegenhalter 368 vorgesehen, gegen den sich die Zahnstange 321 mit einer Anlagefläche in radialer Richtung relativ zur Drehachse A abstützen kann.

Die Kolben-Zylinder-Einheit 311 ist in Form eines einfach wirkenden Druckzylinders gestaltet. Durch Aufbringen eines Drucks am Druckanschluß 360 wird der Kolben 361 entgegen der Kraft der Federmittel 359 in Richtung R1 bewegt. Dabei verläuft die Kraftwirkungsrichtung der Kolbenstange 310 bzw. der Zahnstange 321 mit Abstand a zur Drehachse A, so daß ein Drehmoment auf das Zahnsegment 367 und den damit verbundenen zweiten Ring 308 entgegen dem Uhrzeigersinn ausgeübt wird. Zur Deaktivierung wird der Druckanschluß 360 freigegeben und der Kolben 361 durch die Kraft der Federmittel 359 in Richtung R2, d. h. wieder in seine Ausgangsposition bewegt wird. Dabei wird der zweite Ring 308 im Uhrzeigersinn wieder in seine Ausgangsposition zurückgedreht und nimmt eine Stellung ein, bei der die beiden Ringe 306, 308 einen minimalen axialen Abstand zueinander haben. In diesem Zustand ist die Reibungskupplung 303 wieder geöffnet.

Sämtliche der vorstehend beschriebenen Kupplungsanordnungen haben den Vorteil, daß sie verhältnismäßig große Drehmomente übertragen können, da die für die Axialverstellvorrichtung verwendeten Linearantriebsmittel verhältnismäßig große Kräfte erzeugen können. Somit eignen sich die erfindungsgemäßen Kupplungsanordnungen insbesondere auch für solche Anwendungen, bei denen hohe Drehmomente übertragen werden müssen, beispielsweise im Antriebsstrang von Lastkraftwagen zum bedarfsweise Zuschalten einer weiteren Antriebsachse. Ein weiterer Vorteil liegt darin, daß die erfindungsgemäßen Kupplungsanordnungen aufgrund der verwendeten Axialverstellvorrichtungen mit Linearantriebsmittel einen verhältnismäßig kompakten Aufbau haben. Die Verwendung von Kolben-Zylinder-Einheiten ist besonders günstig, da sie leicht in ein bestehendes Hydraulik- oder Pneumatik-System integriert werden können.

### Bezugszeichenliste

- 2, 102,: Axialverstellvorrichtung
- 3, 103,: Reibungskupplung
- 4, 104,: Kugelrampenanordnung
- 5, 105,: Linearantriebsmittel
- 6,106,: erster Ring
- 7, 107,: erstes Kupplungsteil
- 8, 108,: zweiter Ring
- 9, 109,: Kugel
- 10, 110,: Kolbenstange
- 11, 111,: Kolben-Zylinder-Einheit
- 12, 112,: Kugelrillen
- 13, 113,: Kugelrillen
- 14, 114,: Stützfläche
- 15, 115,: Verdrehsicherungsmittel
- 16,116,: Vorsprung
- 17, 117,: Sicherungsstift
- 18, 118,: Axiallager
- 19, 119,: Stützplatte
- 20, 120,: Sicherung
- 21, 121,: Kraftübertragungselement
- 22, 122,: Druckfläche
- 23, 123,: Axiallager
- 24, 124,: Druckplatte
- 25, 125,: innerer Flanschabschnitt
- 26, 126,: Übergangsabschnitt
- 27, 127,: äußerer Flanschabschnitt
- 29, 129,: Kupplungsnabe
- 30, 130,: Längsverzahnung
- 31, 131,: Betätigungshebel
- 32, 132,: Innenlamellenträger
- 33, 133,: Radialabschnitt
- 34, 134,: Federmittel
- 35, 135,: zweites Kupplungsteil
- 36, 136,: Lamellenpaket
- 37, 137,: Kugelgelenk
- 38, 138,:
- 39, 139,: Anschlußstück
- 142: Getriebeanordnung
- 143: erste Antriebswelle
- 144: Wälzlager
- 145: Wälzlager
- 146: Gehäuse
- 147: Kegelrad
- 148: erstes Zahnrad
- 149: Radiallager
- 150: zweites Zahnrad
- 152: zweite Antriebswelle
- 153: Wälzlager
- 154: Trägerelement
- 155: Schraubmittel
- 156: Durchbruch
- 157: Membrandichtung
- 158: Hülsenabschnitt
- 259, 359: Federmittel
- 260, 360: Anschluß
- 61, 161,: Kolben
- 262: Druckkammer
- 263: stehendes Bauteil
- 264: Kammer
- 265: Anschluß
- 366: Verzahnungsanordnung
- 367: Zahnsegment
- 368: Gegenhalter

- a: Abstand
- A: Drehachse
- B: Drehachse
- C: Längsachse
- R1, R2: Richtung

## Patentansprüche

1. Kupplungsanordnung zum Zuschalten eines bedarfsweise antreibbaren sekundären Antriebsstrangs an einen permanent angetriebenen primären Antriebsstrang, umfassend
eine Reibungskupplung (3, 103, ...) mit einem ersten Kupplungsteil (7, 107, ...), einem zweiten Kupplungsteil (35, 135, ...) und einem Lamellenpaket (36, 136, ...), wobei das erste Kupplungsteil (7, 107, ...) und das zweite Kupplungsteil (35, 135, ...) um eine Drehachse (A) drehbar und durch Einwirken von Axialkräften auf das Lamellenpaket (36, 136, ...) zur Übertragung eines Drehmoments aneinander koppelbar sind; sowie
eine Axialverstellvorrichtung (2, 102, ...) zur Betätigung der Reibungskupplung (3, 103, ...), wobei die Axialverstellvorrichtung (2, 102, ...) einen ersten Ring (6, 106, ...) und einen zweiten Ring (8, 108, ...), der gegenüber dem ersten Ring (6, 106, ...) zumindest mittelbar axial abgestützt ist, aufweist, **dadurch gekennzeichnet, daß** bei Verdrehung zumindest eines der beiden Ringe (6, 106, ...; 8, 108, ...) um eine Achse A der zweite Ring axial verschiebbar ist,
wobei der erste Ring (6, 106, ...) der Axialverstellvorrichtung (2, 102, ...) und das Lamellenpaket (36, 136, ...) der Reibungskupplung (3, 103, ...) gegenüber dem ersten Kupplungsteil (7, 107, ...) axial abgestützt sind, und
wobei zur Verdrehung des zumindest einen der beiden Ringe (6, 106, ...; 8, 108, ...) Linearantriebsmittel (5, 105, ...) vorgesehen sind.

2. Kupplungsanordnung nach Anspruch 1,
**dadurch gekennzeichnet,**
**daß** die Linearantriebsmittel (5, 105, ...) eine Längsachse (C) aufweisen, wobei die Linearantriebsmittel (5, 105, ...) derart angeordnet sind, daß die Längsachse (C) die Drehachse (A) mit Abstand kreuzt.

3. Kupplungsanordnung nach Anspruch 1 oder 2,
**dadurch gekennzeichnet,**
**daß** zumindest einer der beiden Ringe (6, 106, ...; 8, 108, ...) eine Stellkontur in Umfangsrichtung aufweist, die derart gestaltet ist, daß der zweite Ring (8, 108, ...) bei Verdrehung des zumindest einen der beiden Ringe (6, 106, ...; 8, 108, ...) axial verschoben wird.

4. Kupplungsanordnung nach einem der Ansprüche 1 bis 3,
**dadurch gekennzeichnet,**
**daß** das erste Kupplungsteil (7, 107, ...) eine Kupplungsnabe (29, 129, ...) umfaßt, wobei die Axialverstellvorrichtung (2, 102, ...) koaxial zur Kupplungsnabe (29, 129, ...) angeordnet ist.

5. Kupplungsanordnung nach Anspruch 4,
**dadurch gekennzeichnet,**
**daß** der erste Ring (6, 106, ...) der Axialverstellvorrichtung (2, 102, ...) gegenüber der Kupplungsnabe (29, 129, ...) um die Drehachse (A) drehbar gelagert ist.

6. Kupplungsanordnung nach einem der Ansprüche 1 bis 5,
**dadurch gekennzeichnet,**
**daß** zwischen dem zweiten Ring (8, 108, ...) der Axialverstellvorrichtung (2, 102, ...) und der Reibungskupplung (3, 103, ...) eine axial bewegliche Druckplatte (24, 124, ...) zum Beaufschlagen der Reibungskupplung (3, 103, ...) vorgesehen ist.

7. Kupplungsanordnung nach Anspruch 6,
**dadurch gekennzeichnet,**
**daß** die Druckplatte (24, 124, ...) einen äußeren Flanschabschnitt (27, 127, ...) zum Beaufschlagen der Reibungskupplung (3, 103, ...) aufweist sowie einen inneren Flanschabschnitt (25, 215, ...), auf den die Axialverstellvorrichtung (2, 102, ...) einwirkt, wobei der innere Flanschabschnitt (25, 125, ...) gegenüber dem äußeren Flanschabschnitt (27, 127, ...) axial versetzt ist.

8. Kupplungsanordnung nach Anspruch 7,
**dadurch gekennzeichnet,**
**daß** der innere Flanschabschnitt (25, 125, ...) zumindest teilweise mit axialer Überdeckung zur Reibungskupplung (3, 103, ...) angeordnet ist.

9. Kupplungsanordnung nach einem der Ansprüche 1 bis 8,
**dadurch gekennzeichnet,**
**daß** die Linearantriebsmittel (5, 105, ...) ein translatorisch bewegbares Kraftübertragungselement (21, 121, ...) aufweisen, das zumindest mit einem der beiden Ringe (6, 106, ...; 8, 108, ...) zur Kraftübertragung verbunden ist.

10. Kupplungsanordnung nach einem der Ansprüche 1 bis 9,
**dadurch gekennzeichnet,**
**daß** die Linearantriebsmittel (5, 105, ...) eine Kolben-Zylinder-Einheit (11, 111, ...) mit einem Kolben (61, 161, ...) umfassen, wobei der Kolben (61, 161, ...) mit dem Kraftübertragungselement (21, 121, ...) verbunden ist.

11. Kupplungsanordnung nach Anspruch 10,
**dadurch gekennzeichnet,**
**daß** die Kolben-Zylinder-Einheit (11, 111, ...) einen Hydraulikzylinder umfaßt.

12. Kupplungsanordnung nach Anspruch 10,
**dadurch gekennzeichnet,**
**daß** die Kolben-Zylinder-Einheit (11, 111, ...) einen Pneumatikzylinder umfaßt, der insbesondere in Form eines pneumatisch betriebenen Membranzylinders gestaltet ist.

13. Kupplungsanordnung nach einem der Ansprüche 1 bis 12,
**dadurch gekennzeichnet,**
**daß** das Kraftübertragungselement (21) in Form einer Koppelstange gestaltet ist, die gelenkig mit dem zumindest einen Ring (6, 8) verbunden ist.

14. Kupplungsanordnung nach einem der Ansprüche 1 bis 12,
**dadurch gekennzeichnet,**
**daß** das Kraftübertragungselement (321) in Form einer Zahnstange gestaltet ist, wobei der zumindest eine Ring (306, 308) ein Zahnsegment (367) aufweist, mit dem die Zahnstange in Eingriff ist.

15. Kupplungsanordnung nach einem der Ansprüche 1 bis 14,
**dadurch gekennzeichnet,**
**daß** Federmittel (259, 359) vorgesehen sind, die der Kraftwirkungsrichtung (R1) des Kraftübertragungselements (221, 321) entgegenwirken.

16. Kupplungsanordnung nach einem der Ansprüche 1 bis 15,
**dadurch gekennzeichnet,**
**daß** zumindest einer der beiden Ringe (6, 106, 406; 8, 108, 408) sich in Umfangrichtung erstreckende Bahnen (12, 112, 412; 13, 113, 413) mit veränderlicher Tiefe aufweisen, über welche die beiden Ringe (6, 106, 406; 8, 108, 408) zumindest mittelbar gegeneinander axial abgestützt sind.

## Claims

1. A coupling assembly for connecting an optionally drivable secondary driveline to a permanently driven primary driveline, comprising
a friction coupling (3, 103, ...) with a first coupling part (7, 107, ...), a second coupling part (35, 135, ...) and a plate package (36, 136, ...), wherein the first coupling part (7, 107, ...) and the second coupling part (35, 135, ...) are rotatable around an axis of rotation (A) and, by axial forces, can be coupled to one another for transmitting torque; and
an axial setting device (2, 102, ...) for actuating the friction coupling (3, 103, ...), wherein the axial setting device (2, 102, ...) comprises a first ring (6, 106, ...) and a second ring (8, 108, ...) which is supported at least indirectly relative to the first ring (6, 106), **characterised in that** upon rotation of at least one of the two rings (6, 106, ...; 8, 108, ...) around the axis A, the second ring is axially displaceable,
wherein the first ring (6, 106,...) of the axial setting device (2, 102, ...) and the plate package (36, 136, ...) of the friction coupling (3, 103, ...) are axially supported relative to the first coupling part (7, 107, ...), and
wherein, for rotating the at least one of the two rings (6, 106,...; 8, 108, ...), there are provided linear driving means (5, 105, ...).

2. A coupling assembly according to claim 1,
**characterised in**
**that** the linear driving means (5, 105, ...) comprise a longitudinal axis (C), wherein the linear driving means (5, 105, ...) are arranged such that the longitudinal axis (C) intersects the axis of rotation (A) at a distance.

3. A coupling assembly according to claim 1 or 2,
**characterised in**
**that** at least one of the two rings (6, 106, ...; 8, 108, ...) comprises a setting contour in the circumferential direction, which setting contour is configured such that, upon rotation of the at least one of the two rings (6, 106, ...; 8, 108, ...) , the second ring (8, 108, ...) is axially displaced.

4. A coupling assembly according to claim 1 to 3,
**characterised in**
**that** the first coupling part (7, 107) comprises a coupling hub (29, 129, ...), wherein the axial setting device (2, 102, ...) is arranged coaxially relative to the coupling hub (29, 129, ...).

5. A coupling assembly according to claim 4,
**characterised in**
**that** the first ring (6, 106,...) of the axial setting device (2, 102, ...) is rotatingly supported relative to the coupling hub (29, 129, ...) around the axis of rotation (A).

6. A coupling assembly according to any one of claims 1 to 5,
**characterised in**
**that** between the second ring (8, 108, ...) of the axial setting device (2, 102) and the friction coupling (3, 103) there is provided an axially movable pressure plate (24, 124, ...) for loading the friction coupling (3, 103, ...) .

7. A coupling assembly according to claim 6,
**characterised in**
**that** the pressure plate (24, 124, ...) comprises an outer flange portion (27, 127, ...) for loading the friction coupling (3, 103,...) and an inner flange portion (25, 215, ...) which is loaded by the axial setting device (2, 102, ...), wherein the inner flange portion (25, 125, ...) is axially offset relative to the outer flange portion (27, 127).

8. A coupling assembly according to claim 7,
**characterised in**
**that** the inner flange portion (25, 125, ...) is arranged so as to at least partially overlap with the friction coupling (3, 103).

9. A coupling assembly according to any one of claims 1 to 8,
**characterised in**
**that** the linear driving means (5, 105, ...) comprise a translatorily movable force transmitting element (21, 121, ...) which is connected to at least one of the two rings (6, 106, ...; 8, 108, ...) so as to transmit force.

10. A coupling assembly according to claims 1 to 9,
**characterised in**
**that** the linear driving means (5, 105, ...) comprise a piston-cylinder unit (11, 111, ...) with a piston (61, 161, ...), wherein the piston (61, 161, ...) is connected to the force transmitting element (21, 121).

11. A coupling assembly according to claim 10,
**characterised in**
**that** the piston-cylinder unit (11, 111, ...) comprises a hydraulic cylinder.

12. A coupling assembly according to claim 10,
**characterised in**
**that** the piston-cylinder unit (11, 111, ...) comprises a pneumatic cylinder which, more particularly, is provided in the form of a pneumatically operated membrane cylinder.

13. A coupling assembly according to any one of claims 1 to 12,
**characterised in**
**that** the force transmitting element (21) is provided in the form of a coupling rod which is articulatably connected to the at least one ring (6, 8).

14. A coupling assembly according to any one of claims 1 to 12,
**characterised in**
**that** the force transmitting element (321) is provided in the form of a toothed rack, wherein the at least one ring (306, 308) comprises a toothed segment (367) which is engaged by the toothed rack.

15. A coupling assembly according to any one of claims 1 to 14,
**characterised in**
**that** there are provided spring means (259, 359) which act against a force direction (R1) of the force transmitting element (221, 321).

16. A coupling assembly according to claims 1 to 15,
**characterised in**
**that** at least one of the two rings (6, 106, 406; 8, 108, 408) comprises circumferentially extending tracks (12, 112, 412; 13, 113, 413) with variable depths via which the two rings (6, 106, 406; 8, 108, 408) are at least indirectly axially supported relative to one another.

## Revendications

1. Agencement d'accouplement destiné à la mise en service d'une ligne d'entraînement secondaire pouvant être entraînée en cas de besoin, dans une ligne d'entraînement primaire entraînée en permanence, comprenant
un embrayage à friction (3, 103, ...) avec une première partie d'embrayage (7, 107, ...), une deuxième partie d'embrayage (35, 135, ...) et un paquet de disques (36, 136, ...), la première partie d'embrayage (7, 107, ...) et la deuxième partie d'embrayage (35, 135, ...) étant rotatives autour d'un axe de rotation (A) et pouvant, sous l'action de forces axiales sur le paquet de disques (36, 136, ...), être couplées l'une à l'autre pour la transmission d'un couple ;
ainsi qu'un dispositif de déplacement axial d'actionnement (2, 102, ...) pour l'actionnement de l'embrayage à friction (3, 103, ...), le dispositif de déplacement axial d'actionnement (2, 102, ...) présentant un premier anneau (6, 106, ...) et un deuxième anneau (8, 108, ...), qui s'appuie axialement, au moins de manière indirecte, par rapport au premier anneau (6, 106, ...), **caractérisé en ce que** lors d'une rotation d'au moins un des deux anneaux (6, 106, ...; 8, 108, ...) autour d'un axe A, le deuxième anneau peut coulisser axialement,
**en ce que** le premier anneau (6, 106, ...) du dispositif de déplacement axial d'actionnement (2, 102, ...) et le paquet de disques (36, 136, ...) de l'embrayage à friction (3, 103, ...) sont en appui axial par rapport à la première partie d'embrayage (7, 107, ...), et
**en ce que** des moyens d'entraînement linéaire (5, 105, ...) sont prévus pour faire tourner ledit au moins un des deux anneaux (6, 106, ...; 8, 108, ...).

2. Agencement d'accouplement selon la revendication 1,
**caractérisé**
**en ce que** les moyens d'entraînement linéaire (5, 105, ...) présentent un axe longitudinal (C), les moyens d'entraînement linéaire (5, 105, ...) étant agencés de manière telle, que l'axe longitudinal (C) croise l'axe de rotation (A) à distance.

3. Agencement d'accouplement selon la revendication 1 ou la revendication 2,
**caractérisé**
**en ce que** l'un au moins des deux anneaux (6, 106, ...; 8, 108, ...) présente un contour de déplacement d'actionnement dans la direction périphérique, qui est d'une configuration telle, que le deuxième anneau (8, 108, ...) coulisse axialement lors de la rotation dudit au moins un des deux anneaux (6, 106, ...; 8, 108, ...).

4. Agencement d'accouplement selon l'une des revendications 1 à 3,
**caractérisé**
**en ce que** la première partie d'embrayage (7, 107, ...) comprend un moyeu d'embrayage (29, 129, ...), le dispositif de déplacement axial d'actionnement (2, 102, ...) étant agencé coaxialement au moyeu d'embrayage (29, 129, ...).

5. Agencement d'accouplement selon la revendication 4,
**caractérisé**
**en ce que** le premier anneau (6, 106, ...) du dispositif de déplacement axial d'actionnement (2, 102, ...) est monté rotatif par rapport au moyeu d'embrayage (29, 129, ...), autour de l'axe de rotation (A).

6. Agencement d'accouplement selon l'une des revendications 1 à 5,
**caractérisé**
**en ce qu'**entre le deuxième anneau (8, 108, ...) du dispositif de déplacement axial d'actionnement (2, 102, ...) et l'embrayage à friction (3, 103, ...), il est prévu un plateau de pression (24, 124, ...) mobile axialement pour l'actionnement de l'embrayage à friction (3, 103, ...).

7. Agencement d'accouplement selon la revendication 6,
**caractérisé**
**en ce que** le plateau de pression (24, 124, ...) présente un tronçon de flasque extérieur (27, 127, ...) pour l'actionnement de l'embrayage à friction (3, 103, ...), ainsi qu'un tronçon de flasque intérieur (25, 215, ...) sur lequel agit le dispositif de déplacement axial d'actionnement (2, 102, ...), le tronçon de flasque intérieur (25, 125, ...) étant décalé axialement par rapport au tronçon de flasque extérieur (27, 127, ...).

8. Agencement d'accouplement selon la revendication 7,
**caractérisé**
**en ce que** le tronçon de flasque intérieur (25, 125, ...) est agencé au moins en partie en recouvrement axial avec l'embrayage à friction (3, 103, ...).

9. Agencement d'accouplement selon l'une des revendications 1 à 8,
**caractérisé**
**en ce que** les moyens d'entraînement linéaire (5, 105, ...) comprennent un élément de transmission de force (21, 121, ...) mobile en translation, qui est relié à l'un au moins des deux anneaux (6, 106, ...; 8, 108, ...) pour une transmission de force.

10. Agencement d'accouplement selon l'une des revendications 1 à 9,
**caractérisé**
**en ce que** les moyens d'entraînement linéaire (5, 105, ...) comprennent une unité à piston et cylindre (11, 111, ...) avec un piston (61, 161, ...), le piston (61, 161, ...) étant relié à l'élément de transmission de force (21, 121, ...).

11. Agencement d'accouplement selon la revendication 10,
**caractérisé**
**en ce que** l'unité à piston et cylindre (11, 111, ...) comprend un vérin hydraulique.

12. Agencement d'accouplement selon la revendication 10,
**caractérisé**
**en ce que** l'unité à piston et cylindre (11, 111, ...) comprend un vérin pneumatique, qui est notamment réalisé sous la forme d'un vérin à membrane fonctionnant par voie pneumatique.

13. Agencement d'accouplement selon l'une des revendications 1 à 12,
**caractérisé**
**en ce que** l'élément de transmission de force (21) est configuré sous la forme d'une tige de couplage, qui est reliée de manière articulée audit au moins un anneau (6, 8).

14. Agencement d'accouplement selon l'une des revendications 1 à 12,
**caractérisé**
**en ce que** l'élément de transmission de force (321) est configuré sous la forme d'une crémaillère, ledit au moins un anneau (306, 308) présentant au moins un secteur denté (367), qui est en prise avec la crémaillère.

15. Agencement d'accouplement selon l'une des revendications 1 à 14,
**caractérisé**
**en ce que** sont prévus des moyens de ressort (259, 359), qui agissent à l'encontre de la direction d'action de force (R1) de l'élément de transmission de force (221, 321).

16. Agencement d'accouplement selon l'une des revendications 1 à 15,
**caractérisé**
**en ce que** l'un au moins des deux anneaux (6, 106, 406; 8, 108, 408) présente des voies (12, 112, 412; 13, 113, 413) de profondeur variable, par l'intermédiaire desquelles les deux anneaux (6, 106, 406; 8, 108, 408) s'appuient, au moins de manière indirecte, axialement l'un contre l'autre.
